# EUROPÄISCHE PATENTSCHRIFT

(11) **EP 1 922 920 B1**
(45) Veröffentlichungstag und Bekanntmachung des Hinweises auf die Patenterteilung: **09.06.2010**
(21) Anmeldenummer: 07021971.2
(22) Anmeldetag: 13.11.2007
(51) Int. Cl.: A01K 27/00

(54) **Hundegeschirr mit zwei Halsgurten**
Dog harness with two collars
Harnais pour chiens avec deux colliers

(30) Priorität: 14.11.2006 DE 202006017332 U; 27.04.2007 DE 202007006078 U
(43) Veröffentlichungstag der Anmeldung: 21.05.2008
(73) Patentinhaber: Nadine Trautwein und Rolf Trautwein GbR Research & Development, 33818 Leopoldshöhe (DE)
(72) Erfinder: Trautwein, Rolf, 33813 Oerlinghausen (DE)
(74) Vertreter: Bittner, Thomas L.

(56) Entgegenhaltungen:
- WO-A-98/29281
- WO-A-03/086815
- DE-U1- 9 412 362
- DE-U1- 29 620 586
- GB-A- 2 306 875

## Beschreibung

Die Erfindung betrifft ein Hundegeschirr mit zwei Halsgurten, die links und rechts des Halses verlaufen und in einer unterhalb des Halses angeordneten Verbindungsschnalle zusammengeführt sind.

### Hintergrund der Erfindung

Hundegeschirre sind in den verschiedensten Ausbildungen bekannt. Zur Anpassung an die Größe des Hundes sind die Gurte des Geschirrs in der Länge verstellbar. Seit geraumer Zeit finden an Stelle der früher üblichen Ledergurte Gurte aus Kunststoff bzw. synthetische Gurte Verwendung, die leichter und haltbarer sind und eine bessere Trageigenschaft aufweisen.

Aus der DE 101 60 783 B4 ist ein Geschirr der aufgezeigten Gattung bekannt, bei dem sich die Halsgurte kreuzen und am Kreuzungspunkt der Halsgurte eine Verbindungsschnalle angeordnet ist. Die beiden Halsgurte werden jeweils einzeln für sich am Bauchgurt angenäht. Nachteilig bei dieser Ausführung ist das Annähen jedes einzelnen Gurtes, wobei ein Scheuem zwischen den Beinen des Tieres nicht auszuschließen ist.

Aus dem Dokument GB 2 306 875 A ist ein Hundegeschirr mit zwei Halsgurten, die links und rechts des Halses verlaufen und in einer unterhalb des Halses angeordneten Verbindungsschnalle zusammengeführt sind, bekannt.

Im Dokument DE 296 20 586 U1 ist ein Sicherheitsgeschirr für Hunde beschrieben, bei dem Schultergurte unterhalb des Halses in einem Punkt zusammengeführt sind, von dem aus ein Brustgurt bis unter den Bauch verläuft.

Das Dokument WO 03/086815 A2 offenbart ein Hundegeschirr, bei dem ebenfalls zwei Halsgurte, die links und rechts des Halses verlaufen, unterhalb des Halses in einer Verbindungsstelle zusammengeführt werden. Ein Bauchgurt ist mit einer Steckverbindung versehen.

### Zusammenfassung der Erfindung

Der Erfindung liegt die Aufgabe zugrunde, ein Hundegeschirr zu schaffen, welches einfacher herzustellen ist und bei dem die Gefahr des Scheuems zwischen den Beinen des Tieres auf ein Minimum reduziert ist.

Erfindungsgemäß wird diese Aufgabe durch ein Hundegeschirr nach dem unabhängigen Anspruch 1 gelöst. Vorteilhafte Ausgestaltungen der Erfindung sind Gegenstand von abhängigen Unteransprüchen.

Gemäß der Erfindung ist vorgesehen, daß zwei Halsgurte nach der Verbindungsschnalle als ein Doppelgurt geführt sind und der Doppelgurt schlaufenartig an einem Bauchgurt angeschlossen ist. Die Schlaufe, an welche der Doppelgurt anschließt, kann verstellbar am Bauchgurt geführt sein.

Eine zweckmäßige Weiterbildung der Erfindung sieht vor, daß die beiden Halsgurte in dem Doppelgurt übereinanderliegend angeordnet sind. Alternativ hierzu verlaufen die beiden Halsgurte im Bereich des Doppelgurtes nebeneinanderliegend.

In Ausgestaltung der Erfindung ist die Schlaufe am Bauchgurt arretiert, zum Beispiel mittels Ansteppen oder Annähen. Es besteht jedoch auch die Möglichkeit, die Schlaufe über einen Klettverschluß oder über Druckknöpfe am Bauchgurt anzuschließen.

In Ausgestaltung der Erfindung sind zur Druckentlastung die Halsgurte und der Doppelgurt mit einer Polsterung versehen. Diese Polsterung kann durch eine in die Gurte eingeführte weiche Einlage gebildet sein. Als Variante besteht die Möglichkeit, die Polsterung auswechselbar auf die am Körper des Hundes anliegenden Flächen der Gurte aufzubringen. Bei dieser Variante ist die Polsterung über Druckknöpfe an den Gurten gehaltert, wobei die Druckknöpfe auf der dem Körper des Hundes wegweisenden Flächen der Gurte angeordnet sind.

In den verschiedenen Ausführungsformen können die Gurt- und Riemenelemente aus Leder oder einem Nylonmaterial hergestellt sein. Auch eine Kombination dieser Materialien kann vorgesehen sein. Bevorzugt sind die Gurtelemente der Halsgurte und des Bauchgurts rundgenäht. In einer weiteren Ausführungsform sind die Gurtelemente der Halsgurte und des Bauchgurts flachgenäht. Auch eine Kombination von rundgenähten und flachgenähten Gurtelementen kann vorgesehen sein.

Die zwei Halsgurte können in einer Ausgestaltung über eine trennbare Riemenverbindung schlaufenartig an den Bauchgurt angeschlossen sein. Mittels der Riemenverbindung kann die Schlaufe vom Doppelgurt getrennt werden.

### Beschreibung bevorzugter Ausführungsbeispiele der Erfindung

Die Erfindung wird im folgenden anhand von bevorzugten Ausführungsbeispielen unter Bezugnahem auf Figuren einer Zeichnung näher erläutert. Hierbei zeigen in schematischer Darstellung:

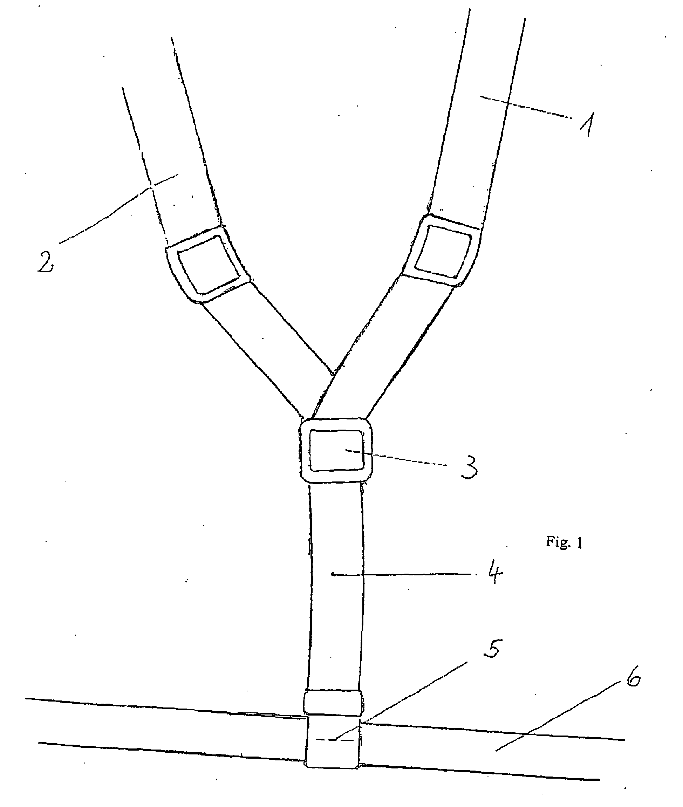

- Fig. 1: Führung und Anschluß von zwei Halsgurten, und
- Fig. 2: ein Hundegeschirr, bei dem zwei Halsgurte nach einer Verbindungsschnalle als ein Doppelgurt geführt sind und der Doppelgurt schlaufenartig an einem Bauchgurt angeschlossen ist, wobei die beiden Halsgurte im Bereich des Dopplegurtes in Vorderansicht nebeneinanderliegend verlaufen sind.

Die beiden Halsgurte 1; 2 werden in der Verbindungsschnalle 3 zusammengeführt. Nach der Verbindungsschnalle 3 liegen die beiden Halsgurte 1; 2 übereinander und werden als Doppelgurt 4 bis zum Bauchgurt 6 geführt, wo sie schlaufenartig angeschlossen sind. Die Schlaufe 5 kann verstellbar oder arretierbar am Bauchgurt 6 angeschlossen sein. Auf die Halsgurte 1; 2 und den Doppelgurt 4 sind auf die am Körper des Hundes anliegenden Flächen je eine Polsterung aufgebracht.

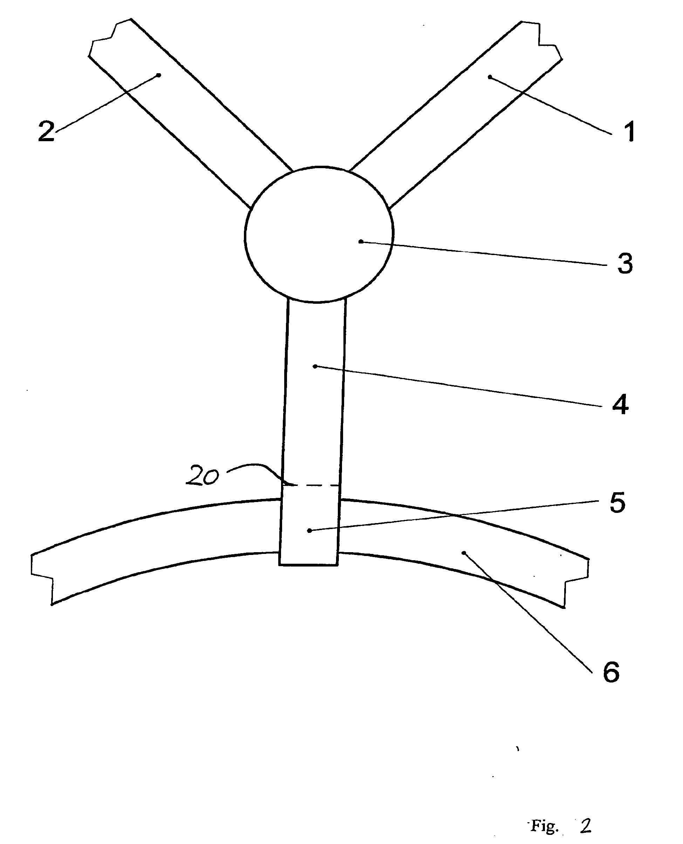

Fig. 2 zeigt ein weiteres Hundegeschirr, bei dem zwei Halsgurte 1, 2 nach einer Verbindungsschnalle 3 als ein Doppelgurt 4 geführt sind und Doppelgurt 4 über eine trennbare Riemenverbindung 20 schlaufenartig an einem Bauchgurt 6 angeschlossen ist, wobei die beiden Halsgurte 1, 2 im Bereich des Dopplegurtes 4 nebeneinanderliegend angeordnet sind. Mittels der Riemenverbindung 20 kann die Schlaufe 5 vom Doppelgurt 4 getrennt werden.

In den verschiedenen Ausführungsformen können die Gurt- und Riemenelemente aus Leder oder einem Synthetikmaterial, beispielsweise ein Nylonmaterial, hergestellt sein. Auch eine Kombination dieser Materialien kann vorgesehen sein. Bevorzugt sind die Gurtelemente der Halsgurte 1,2 und des Bauchgurts 6 rundgenäht.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Hundegeschirr mit einem Rückengurt (8) und zwei Halsgurten (1; 2), die links und rechts des Halses verlaufen, in einer unterhalb des Halses angeordneten Verbindungsschnalle (3) zusammengeführt sind und nach der Verbindungsschnalle (3) als ein Doppelgurt (4) geführt sind **dadurch gekennzeichnet, daß** der Doppelgurt (4) schlaufenartig an einem Bauchgurt (6) angeschlossen ist.

2. Hundegeschirr nach Anspruch 1, **dadurch gekennzeichnet, daß** die Schlaufe (5) verstellbar am Bauchgurt (6) geführt ist.

3. Hundegeschirr nach Anspruch 1, **dadurch gekennzeichnet, daß** die Schlaufe (5) am Bauchgurt (6) arretiert ist.

4. Hundegeschirr nach Anspruch 3, **dadurch gekennzeichnet, daß** die Schlaufe (5) am Bauchgurt (6) angesteppt oder angenäht ist.

5. Hundegeschirr nach Anspruch 3, **dadurch gekennzeichnet, daß** die Schlaufe (5) des Doppelgurtes (4) über einen Klettverschluß am Bauchgurt (6) angeschlossen ist.

6. Hundegeschirr nach Anspruch 3, **dadurch gekennzeichnet, daß** die Schlaufe (5) des Doppelgurtes (4) über Druckknöpfe am Bauchgurt (6) angeschlossen ist.

7. Hundegeschirr nach mindestens einem der vorangehenden Ansprüche, **dadurch gekennzeichnet, daß** die Halsgurte (1; 2) und der Doppelgurt (4) mit einer Polsterung versehen sind.

8. Hundegeschirr nach Anspruch 7, **dadurch gekennzeichnet, daß** die Polsterung durch eine in die Gurte (1; 2; 4) eingeführte weiche Einlage gebildet ist.

9. Hundegeschirr nach Anspruch 7, **dadurch gekennzeichnet, daß** die Polsterung auf den Gurten (1; 2; 4) aufgebracht ist.

10. Hundegeschirr nach Anspruch 9, **dadurch gekennzeichnet, daß** die Polsterung auf die am Körper des Hundes anliegenden Flächen der Gurte (1; 2; 4) aufgebracht ist.

11. Hundegeschirr nach Anspruch 9 oder 10, **dadurch gekennzeichnet, daß** die Polsterung auswechselbar angeordnet ist.

12. Hundegeschirr nach mindestens einem der Ansprüche 9 bis 11, **dadurch gekennzeichnet, daß** die Polsterung über Druckknöpfe an den Gurten (1; 2; 4) gehaltert ist.

13. Hundegeschirr nach Anspruch 12, **dadurch gekennzeichnet, daß** die Druckknöpfe auf den dem Körper des Hundes wegweisenden Flächen der Gurte (1; 2; 4) angeordnet sind.

14. Hundegeschirr nach mindestens einem der vorangehenden Ansprüche, **dadurch gekennzeichnet, daß** die beiden Halsgurte (1; 2) in dem Doppelgurt (4) übereinanderliegend angeordnet sind.

## Claims

1. A dog harness with a back strap (8) and two neck straps (1; 2), which extend to the left and right of the neck, are brought together at a connecting buckle (3) arranged under the neck and continue after the connecting buckle (3) as a double strap (4), **characterised in that** the double strap (4) is coupled loop-like to a girth strap (6).

2. The dog harness according to claim 1, **characterised in that** the loop (5) is guided adjustably on the girth strap (6).

3. The dog harness according to claim 1, **characterised in that** the loop (5) is locked to the girth strap (6).

4. The dog harness according to claim 3, **characterised in that** the loop (5) is stitched or sewn to the girth strap (6).

5. The dog harness according to claim 3, **characterised in that** the loop (5) of the double strap (4) is coupled to the girth strap (6) by means of a hook and loop fastening.

6. The dog harness according to claim 3, **characterised in that** the loop (5) of the double strap (4) is coupled to the girth strap (6) by means of press studs.

7. The dog harness according to at least one of the preceding claims, **characterised in that** the neck straps (1; 2) and the double strap (4) are provided with padding.

8. The dog harness according to claim 7, **characterised in that** the padding is formed by a soft insert introduced into the straps (1; 2; 4).

9. The dog harness according to claim 7, **characterised in that** the padding is applied onto the straps (1; 2; 4).

10. The dog harness according to claim 9, **characterised in that** the padding is applied onto the surfaces of the straps (1; 2; 4) resting against the body of the dog.

11. The dog harness according to claim 9 or claim 10, **characterised in that** the padding is arranged so as to be replaceable.

12. The dog harness according to at least one of claims 9 to 11, **characterised in that** the padding is held on the straps (1; 2; 4) by means of press studs.

13. The dog harness according to claim 12, **characterised in that** the press studs are arranged on surfaces of the straps (1; 2; 4) facing away from the body of the dog.

14. The dog harness according to at least one of the preceding claims, **characterised in that** the two neck straps (1; 2) are arranged one on top of the other in the double strap (4).

## Revendications

1. Harnais de chien avec une sangle dorsale (8) et deux sangles de cou (1 ; 2) qui courent à gauche et à droite du cou et se réunissent dans une boucle de liaison (3) disposée en-dessous du cou et sont conduits après la boucle de liaison (3) comme double-sangle (4), **caractérisé en ce que** la double-sangle (4) est raccordée en forme de noeud coulant à une sangle ventrale (6).

2. Harnais de chien selon la revendication 1, **caractérisé en ce que** le noeud coulant (5) est réglable et conduit sur la sangle ventrale (6).

3. Harnais de chien selon la revendication 1, **caractérisé en ce que** le noeud coulant (5) est arrêté sur la sangle ventrale (6).

4. Harnais de chien selon la revendication 3, **caractérisé en ce que** le noeud coulant (5) est piqué ou cousu sur la sangle ventrale (6).

5. Harnais de chien selon la revendication 3, **caractérisé en ce que** le noeud coulant (5) de la double-sangle (4) est raccordé par l'intermédiaire d'une bande Velcro à la sangle ventrale (6).

6. Harnais de chien selon la revendication 3, **caractérisé en ce que** le noeud coulant (5) de la double-sangle (4) est raccordé par l'intermédiaire de boutons-pression à la sangle ventrale (6).

7. Harnais de chien selon l'une quelconque des revendications précédentes, **caractérisé en ce que** les sangles de cou (1 ; 2) et la double-sangle (4) sont dotées d'un rembourrage.

8. Harnais de chien selon la revendication 7, **caractérisé en ce que** le rembourrage est formé par une garniture souple introduite dans les sangles (1 ; 2 ; 4).

9. Harnais de chien selon la revendication 7, **caractérisé en ce que** le rembourrage est appliqué sur les sangles (1 ; 2 ; 4).

10. Harnais de chien selon la revendication 9, **caractérisé en ce que** le rembourrage est appliqué sur les surfaces des sangles (1 ; 2 ; 4) qui touchent le corps du chien.

11. Harnais de chien selon l'une quelconque des revendications 9 ou 10, **caractérisé en ce que** le rembourrage est disposé de manière à être remplaçable.

12. Harnais de chien selon au moins l'une quelconque des revendications 9 à 11, **caractérisé en ce que** le rembourrage est maintenu sur les sangles (1 ; 2 ; 4) par l'intermédiaire de boutons-pression.

13. Harnais de chien selon la revendication 12, **caractérisé en ce que** les boutons-pression sont disposés sur les surfaces des sangles (1 ; 2 ; 4) qui ne touchent pas le corps du chien.

14. Harnais de chien selon l'une quelconque des revendications précédentes, **caractérisé en ce que** les deux sangles de cou (1 ; 2) sont disposées l'une au-dessus de l'autre dans la double-sangle (4).
